(19) Europäisches Patentamt / European Patent Office / Office européen des brevets

(11) **EP 4 566 712 A1**

(12) **DEMANDE DE BREVET EUROPEEN**

(43) Date de publication:
**11.06.2025 Bulletin 2025/24**

(21) Numéro de dépôt: **24215401.1**

(22) Date de dépôt: **26.11.2024**

(51) Classification Internationale des Brevets (IPC):
*B01J 37/16* *(2006.01)* *B01J 37/20* *(2006.01)*

(52) Classification Coopérative des Brevets (CPC):
**B01J 37/20; B01J 37/0203;** B01J 21/04;
B01J 23/883

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **08.12.2023 FR 2313808**

(71) Demandeur: **Eurecat S.A.**
**07800 La Voulte-sur-Rhône (FR)**

(72) Inventeurs:
• **ITALIANO, Giuseppe**
  **26000 Valence (FR)**
• **GALLIOU, Pauline**
  **07800 Saint Laurent du Pape (FR)**

(74) Mandataire: **Casalonga**
**Casalonga & Partners**
**Bayerstraße 71/73**
**80335 München (DE)**

(54) **PROCÉDÉ DE SULFURATION DE CATALYSEURS DE TRAITEMENT D' HYDROCARBURES**

(57) La présente invention a pour objet un procédé de sulfuration d'un catalyseur de traitement d'hydrocarbures, comprenant :

(i) au moins une étape de mise en contact du catalyseur avec une émulsion comprenant :

(ia) une phase aqueuse comprenant au moins un acide; et

(ib) une phase organique ; puis

(ii) au moins une étape de mise en contact du catalyseur avec un mélange gazeux soufré contenant de l'hydrogène et un composé sulfuré.

La présente invention porte également sur un procédé de traitement d'un catalyseur usé, mettant en oeuvre un tel traitement de sulfuration après une étape de régénération.

## Description

La présente invention concerne un procédé de sulfuration de catalyseurs destinés au traitement d'hydrocarbures dans le domaine notamment du raffinage pétrolier et de la pétrochimie, mettant en oeuvre une émulsion comprenant une phase aqueuse acide et une phase organique.

## ETAT DE L'ART ANTERIEUR

Les procédés de traitement des hydrocarbures effectués dans les raffineries et/ou les unités de pétrochimie incluent un certain nombre de traitements réalisés éventuellement en présence d'hydrogène, qui sont destinés à modifier la structure des molécules d'hydrocarbures et/ou à éliminer des coupes hydrocarbonées des composés indésirables tels que notamment les composés soufrés, azotés, oxygénés, aromatiques, métalliques. Peuvent être cités, à titre d'exemples non limitatifs, les procédés d'hydrocraquage ou d'hydroconversion, de réformage, d'isomérisation, d'alkylkation, d'hydrogénation, de déshydrogénation et les procédés dits d'hydrotraitement tels que les procédés d'hydrodésulfuration, d'hydrodéazotation, d'hydrodéaromatisation, d'hydrodémétallation, d'hydrodéoxygénation.

Ces procédés font appel à des catalyseurs spécifiques, qui se présentent sous forme de particules de petite taille (ou grains de catalyseur) et comprennent un support poreux à base d'un ou plusieurs oxydes inorganiques réfractaires, sur lequel sont déposés un ou plusieurs métaux catalytiquement actifs. Ces métaux comprennent le plus souvent un ou plusieurs métaux du groupe VIII de la classification périodique des éléments, et/ou un ou plusieurs métaux du groupe VIB.

A l'issue de la fabrication du catalyseur, ou à l'issue de sa régénération dans le cas d'un catalyseur déjà utilisé, les métaux se présentent sous forme d'oxydes métalliques qui, en tant que tels, ne sont pas actifs.

Pour permettre aux catalyseurs d'être actifs dans les différents procédés de traitement d'hydrocarbures, il est nécessaire de procéder à une sulfuration du catalyseur, à savoir un traitement de celui-ci au moyen de composés soufrés, dans le but de transformer les oxydes métalliques en sulfures mixtes, qui constituent la phase active du catalyseur.

Cette étape de sulfuration est particulièrement importante, puisqu'elle conditionne l'activité du catalyseur dans son utilisation ultérieure.

De nombreux procédés de sulfuration ont été décrits dans l'état de la technique, tels que notamment des procédés de sulfuration en phase gazeuse dans lesquels le catalyseur est traité au moyen d'un mélange gazeux contenant du soufre (typiquement sous forme de sulfure d'hydrogène).

Ainsi, la demande de brevet EP 1 634 939 décrit un procédé de sulfuration effectué en phase gazeuse, au moyen d'un gaz contenant de l'hydrogène sulfuré ($H_2S$) et de l'hydrogène ($H_2$), avec un rapport molaire $H_2S / H_2$ supérieur à 4 et une pression partielle d'$H_2S$ au moins égale à 1 kPa.

De nombreuses méthodes destinées à améliorer les performances de ces procédés de sulfuration ont été décrites.

Ainsi, la demande de brevet EP 0 993 868 décrit un procédé de sulfuration ex-situ d'un catalyseur d'hydroconversion d'hydrocarbures, en présence d'hydrogène et d'au moins un composé sulfuré. Ce procédé se caractérise en ce que le catalyseur est mis au contact avec au moins un composé hydrocarboné de préférence liquide, préalablement à la sulfuration.

La demande de brevet EP 1 077 085 décrit un procédé de sulfuration qui se caractérise en ce que le catalyseur est précarboné de manière à déposer dans ses pores un composé carboné en majeure partie non lixiviable.

Par ailleurs, la demande de brevet EP 1 272 272 décrit un procédé de sulfuration d'un catalyseur contenant au moins un métal hydrogénant des groupes VI et/ou VIII et un additif organique, dans lequel le catalyseur est, dans un premier temps, mis en contact avec un liquide organique, puis, dans un second temps, mis en contact avec de l'hydrogène et un composé gazeux contenant du soufre, sous réserve que moins de 40% du soufre présent dans le catalyseur sulfuré ait été apporté par le liquide organique.

On connaît par ailleurs l'utilisation d'auxiliaires de sulfuration tels que notamment des acides organiques, qui sont déposés à la surface du catalyseur avant l'étape de sulfuration.

Ainsi, la demande EP 2 295 521 décrit un procédé de sulfuration d'un catalyseur de traitement d'hydrocarbures, comprenant une première étape de dépôt, à la surface du catalyseur, d'un diacide carboxylique insaturé de formule particulière, puis une seconde étape de sulfuration en phase gazeuse. L'acide est déposé par imprégnation du catalyseur au moyen d'une solution aqueuse le contenant, suivie d'une étape de séchage afin d'éliminer l'eau.

La demande EP 2 295 522 décrit un procédé analogue dans laquelle un acide thiocarboxylique est déposé au cours de la première étape.

Poursuivant ses recherches en matière de sulfuration de catalyseurs d'hydrotraitement, la Demanderesse a maintenant découvert qu'il était possible d'améliorer les procédés de sulfuration en phase gazeuse en traitant le catalyseur au moyen d'une émulsion particulière, préalablement à l'étape de sulfuration. Cette découverte est à la base de la présente invention.

**RESUME DE L'INVENTION**

Ainsi, la présente invention a pour objet un procédé de sulfuration d'un catalyseur de traitement d'hydrocarbures, comprenant :

(i) au moins une étape de mise en contact du catalyseur avec une émulsion comprenant :

(ia) une phase aqueuse comprenant au moins un acide; et
(ib) une phase organique ; puis

(ii) au moins une étape de mise en contact du catalyseur avec un mélange gazeux soufré contenant de l'hydrogène et un composé sulfuré.

Le procédé selon l'invention permet d'obtenir un meilleur degré de sulfuration du catalyseur, par rapport aux procédés de l'art antérieur.

Il permet également d'augmenter de manière importante l'activité du catalyseur.

De plus, par rapport à un procédé fictif - non décrit dans l'art antérieur - qui comprendrait une étape de dépôt d'un auxiliaire de sulfuration acide en solution aqueuse puis une étape d'imprégnation d'un hydrocarbures liquide, le procédé selon l'invention s'est avéré permettre de réduire de manière importante les phénomènes indésirables d'attrition du catalyseur.

De manière connue en soi, l'attrition des particules de catalyseur correspond à une usure mécanique desdites particules par frottement des grains entre eux ou contre les parois des enceintes les contenant, par chocs et ou écrasement, notamment lors du transport, de la manipulation et de l'utilisation du catalyseur. Ce phénomène se traduit par une casse des particules et une diminution non souhaitée de leur taille, ainsi que par la formation de "fines" c'est-à-dire de poussières indésirables.

Le procédé selon l'invention convient pour la sulfuration tant de catalyseurs d'hydrotraitement neufs, que de catalyseurs d'hydrotraitement usés qui ont été préalablement régénérés. Il est particulièrement approprié pour effectuer la sulfuration de catalyseurs d'hydrotraitement usés, qui ont été préalablement régénérés.

La présente invention a ainsi également pour objet un procédé de traitement d'un catalyseur d'hydrotraitement usé, mettant en oeuvre le procédé de sulfuration particulier décrit dans la présente demande à la suite d'une étape de régénération. Un tel procédé de traitement comprend ainsi une étape de régénération du catalyseur par traitement thermique en présence d'oxygène et à une température allant de 350°C à 550°C, suivie du procédé de sulfuration selon l'invention.

D'autres objets, caractéristiques, aspects et avantages de l'invention apparaîtront encore plus clairement à la lecture de la description.

Dans ce qui va suivre, et à moins d'une autre indication, les bornes d'un domaine de valeurs sont comprises dans ce domaine, notamment dans les expressions « compris entre » et « allant de ... à ... ».

Par ailleurs, les expressions « au moins un » et « au moins » utilisées dans la présente description sont respectivement équivalentes aux expressions « un ou plusieurs » et « supérieur ou égal ».

Enfin, de manière connue en soi, on désigne par composé ou groupe en $C_N$ un composé ou un groupe contenant dans sa structure chimique N atomes de carbone.

**DESCRIPTION DETAILLEE**

La phase aqueuse (ia) de l'émulsion

L'émulsion mise en oeuvre à l'étape (i) du procédé selon l'invention comprend une phase aqueuse (ia).

Cette phase aqueuse comprend de l'eau et un ou plusieurs acides, qui peuvent être choisi parmi les acides minéraux et les acides organiques. Elle se présente typiquement sous forme d'une solution du ou des acides dans l'eau.

Le ou les acides peuvent être présents sous forme d'acides libres ou sous forme salifiée, par exemple sous forme de sels de métal alcalin tels que les sels de sodium et de potassium, les sels de métal alcalino-terreux tels les sels de magnésium, et les sels d'ammonium.

On peut employer tout acide soluble dans l'eau à la température à laquelle est effectuée l'étape (i).

Parmi les acides minéraux utilisables, on peut citer notamment l'acide phosphorique ($H_3PO_4$), l'acide méta phosphorique ($HPO_3$) et l'acide pyrophosphorique ($H_4P_2O_7$).

Selon un mode de réalisation préféré, la phase aqueuse comprend un ou plusieurs acides organiques, de préférence choisis parmi les acides carboxyliques.

Le ou les acides carboxyliques utilisables dans l'invention contiennent typiquement de 1 à 10 atomes de carbone. Ils peuvent contenir, outre les atomes de carbone, d'hydrogène et d'oxygène, des hétéroatomes tels que notamment du soufre et de l'azote.

De tels acides carboxyliques peuvent être avantageusement choisis parmi les acides monocarboxyliques, les acides dicarboxyliques, les acides tricarboxyliques, les acides aminopolycarboxyliques, et leurs mélanges.

Parmi les acides monocarboxyliques, on peut citer notamment ceux de formule R-COOH avec R désignant un groupe hydrocarboné, saturé ou insaturé, comprenant de 1 à 9 atomes de carbone et optionnellement un ou plusieurs hétéroatomes tels que le soufre, l'oxygène et l'azote. A titre d'exemple de tels acides, on peut citer notamment l'acide méthanoïque (acide formique), l'acide éthanoïque (acide acétique), l'acide lactique, l'acide glycolique, l'acide crotonique, l'acide acrylique, les thioacides tel que l'acide 2-hydroxy-4-méthylthiobutanoïque, l'acide thioglycolique, les aminoacides tels que l'acide 2-amino-éthanoïque (glycine).

Parmi les acides dicarboxyliques, on peut citer notamment l'acide malique, l'acide maléique, l'acide malonique, l'acide itaconique, l'acide oxalique, l'acide mésoxalique, l'acide fumarique, l'acide succinique, l'acide tartrique, l'acide glutarique, l'acide cétoglutarique, l'acide iminodiacétique, l'acide galactarique (acide mucique), l'acide adipique, l'acide diglycolique, l'acide valérique et leurs mélanges.

Parmi les acides tricarboxyliques, on peut citer notamment l'acide citrique, l'acide iso-citrique l'acide aconitique, l'acide oxalosuccinique.

Parmi les acides aminopolycarboxyliques, on peut utiliser notamment l'acide éthylènediamine tétraacétique (EDTA), l'acide nitrilotriacétique (NTA), l'acide diéthylènetriaminepentaacétique (DTPA).

Le ou les acides carboxyliques sont de préférence choisis parmi l'acide glycolique, l'acide thioglycolique, l'acide maléique, l'acide citrique, et leurs mélanges.

Selon un mode de réalisation particulièrement préféré, la phase aqueuse contient de l'acide citrique.

De préférence, la phase aqueuse contient le ou les acides en une teneur de 5 à 50% en poids, plus préférentiellement de 15 à 30% en poids, par rapport au poids de la phase aqueuse.

Cette teneur est exprimée sur la base de la forme acide libre, non salifiée.

Par ailleurs, le ou les acides représentent avantageusement de 3 à 30% en poids, de préférence de 5 à 20% en poids, par rapport au poids total de l'émulsion.

Cette teneur est exprimée sur la base de la forme acide libre, non salifiée.

La phase aqueuse possède avantageusement un pH compris dans la gamme allant de 1 à 7, de préférence de 1,5 à 3.

La phase aqueuse représente de préférence de 40 à 70% en volume, par rapport au volume total de l'émulsion, de préférence de 50 à 60% en volume.

La phase organique (ib) de l'émulsion

L'émulsion mise en oeuvre à l'étape (i) du procédé selon comprend une phase organique (ib).

Par « phase organique », on entend tout milieu non aqueux ayant une solubilité dans l'eau à température ambiante (25°C) et à pression atmosphérique (760 mm Hg) inférieure à 1 % en poids, et de préférence inférieure à 0,5% en poids.

De préférence, la phase organique est liquide à température ambiante et pression atmosphérique.

La phase organique comprend avantageusement une ou plusieurs huiles, de préférence choisies parmi les composés et mélanges de composés comprenant au moins une chaîne ayant au moins 8 atomes de carbone. La ou les huiles peuvent être notamment choisies parmi les huiles végétales, les huiles animales, les huiles minérales, les huiles synthétiques et leurs mélanges.

Comme huile végétale, on peut citer à titre d'exemples l'huile de ricin, l'huile de tournesol, l'huile d'arachide, l'huile de soja, l'huile de colza, l'huile de coprah, l'huile de maïs, l'huile de palme, l'huile de lin, l'huile de carthame.

On peut également citer les huiles de cuisson usagées, qui peuvent comprendre des huiles végétales et/ou des huiles animales.

Les huiles minérales appropriées sont notamment choisies parmi les hydrocarbures et mélanges d'hydrocarbures liquide issus de la distillation du pétrole, tels que notamment et de manière non limitative : les fractions de carburants et/ou de combustibles telles que les fractions d'essence, de carburéacteur, de naphtas, de gazoles, de fiouls ; les fractions d'huile lubrifiante telle que par exemple une huile commercialisée sous l'appellation « 150 Neutral » ; les fractions de solvants telles que celles connues sous l'appellation anglaise « white spirits ».

Des huiles minérales préférées sont choisies parmi les fractions de gazoles (incluant notamment les gazoles de distillation atmosphérique et les gazoles de distillation sous vide) et les fractions de solvants constitués d'hydrocarbures choisis parmi les hydrocarbures paraffiniques en $C_8$ à $C_{14}$, les hydrocarbures cycloparaffiniques en $C_8$ à $C_{14}$, les hydrocarbures aromatiques, et leurs mélanges.

Ces mélanges d'hydrocarbures peuvent avoir le cas échéant subi un ou plusieurs hydrotraitement, par exemple d'hydrodésulfuration, d'isomérisation,....

Comme huile synthétique, on peut notamment citer les poly(alpha-oléfines) comme par exemple les polydécènes et les polyisobutènes ; les hydrocarbures et mélanges d'hydrocarbures obtenus par synthèse tels que notamment par un procédé de synthèse Fischer-Tropsch ou par hydrotraitement d'huiles végétale ; les huiles végétales transestérifiées.

Selon un mode de réalisation préféré, la phase organique comprend une ou plusieurs huiles minérales et/ou une ou plusieurs huiles végétales telles que décrites ci-avant.

La phase organique peut également comprendre un ou plusieurs corps gras solides à température ambiante tels que par exemple des cires.

A titre de cires utilisables dans la présente invention, on peut citer les cires d'origine animale telles que la cire d'abeille; les cires végétales telles que la cire de tournesol; les cires minérales, par exemple, les cires de paraffine, les cires de vaseline; les cires synthétiques telles que les cires de polyéthylènes, les cires issues d'une synthèse Fischer-Tropsch; et leurs mélanges.

La phase organique représente de préférence de 30 à 60% en volume, par rapport au volume total de l'émulsion, de préférence de 40 à 50% en volume.

Les composés soufrés (en option)

Selon un mode de réalisation préféré, l'émulsion comprend également un ou plusieurs composés soufrés, qui peuvent être choisis parmi les composés soufrés organiques et les composés soufrés minéraux.

Lorsque l'émulsion contient un ou plusieurs composés soufrés minéraux, ce ou ces composés soufrés sont avantageusement présents dans la phase aqueuse de l'émulsion. Ainsi, selon un mode de réalisation préféré de l'invention, la phase aqueuse (ia) contient un ou plusieurs composés soufrés, de préférence choisis parmi les composés soufrés minéraux.

Les composés soufrés minéraux peuvent être notamment choisis parmi les thiosulfates tels que le thiosulfate de sodium, le thiosulfate de potassium, le thiosulfate d'ammonium ; les métabisulfites tels que par exemple le métabisulfite de sodium, le métabisulfite de potassium, le métabisulfite d'ammonium ; et le soufre élémentaire (ce dernier étant avantageusement en suspension dans la phase aqueuse).

Lorsque l'émulsion contient un ou plusieurs composés soufrés organiques, ce ou ces composés soufrés sont avantageusement présents dans la phase organique de l'émulsion. Ainsi, selon un mode de réalisation préféré de l'invention, la phase organique (ib) contient un ou plusieurs composé soufrés, de préférence choisis parmi les composés soufrés organiques.

Les composés soufrés organiques peuvent être notamment choisis parmi les polysulfures, les mercaptans, les thiols, les thiophènes, les sulfoxydes.

Les polysulfures sont notamment choisis parmi les composés de formule R-$S_n$-R', dans laquelle :

- n est un nombre entier compris dans la gamme allant de 3 à 20, de préférence de 3 à 8 et plus particulièrement de 3 à 7, et
- R et R', identiques ou différents, représentent des radicaux organiques contenant de 1 à 150 atomes de carbone, de préférence de 10 à 60 atomes de carbone et plus particulièrement de 15 à 30 atomes de carbone, R' pouvant également représenter l'hydrogène. Ces radicaux peuvent être saturés ou insaturés, linéaires ou ramifiés, ou cycliques, et peuvent être choisis dans le groupe constitué par les radicaux alkyles, les radicaux alcényles, les radicaux aryles, les radicaux alkylaryles et les radicaux arylalkyles, ces radicaux pouvant comporter au moins un hétéroatome.

A titre d'exemple de polysulfure, on peut citer le di-tert-butyl-polysulfure de formule $(CH_3)_3C$-$S_4$-$C(CH_3)_3$.

Les mercaptans sont notamment choisis parmi les composés de formule R-SH, dans laquelle R représente un radical organique contenant de 1 à 150 atomes de carbone, de préférence 10 à 60 atomes de carbone et plus particulièrement de 8 à 30 atomes de carbone. Ce radical peut être saturé ou insaturé, linéaire ou ramifié, ou cyclique, et peut être choisi dans le groupe constitué par les radicaux alkyles, les radicaux alcényles, les radicaux aryles, les radicaux alkylaryles et les radicaux arylalkyles, ces radicaux pouvant comporter au moins un hétéroatome.

A titre d'exemple de mercaptan, on peut citer le 1-nonanethiol de formule $CH_3(CH_2)_7CH_2$-SH.

Les sulfoxydes sont notamment choisis parmi les composés de formule R-SO-R', dans laquelle R et R', identiques ou différents, représentent des radicaux organiques contenant de 1 à 150 atomes de carbone, de préférence de 10 à 60 atomes de carbone et plus particulièrement de 15 à 30 atomes de carbone, R' pouvant également représenter l'hydrogène. Ces radicaux peuvent être saturés ou insaturés, linéaires ou ramifiés, ou cycliques, et peuvent être choisis dans le groupe constitué par les radicaux alkyles, les radicaux alcényles, les radicaux aryles, les radicaux alkylaryles et les radicaux arylalkyles, ces radicaux pouvant comporter au moins un hétéroatome.

A titre d'exemple de sulfoxyde, on peut citer le dodécylméthyl sulfoxide de formule $CH_3(CH_2)_{10}CH_2$-SO-$CH_3$.

Il est bien entendu possible d'utiliser des mélanges de composés organiques soufrés tels que décrits ci-dessus.

D'une manière générale, le ou les composés soufrés lorsqu'ils sont présents représentent avantageusement de 4 à 12% en poids, de préférence de 6 à 10% en poids, par rapport au poids total de l'émulsion.

Selon un mode de réalisation préféré, la phase organique de l'émulsion contient un ou plusieurs composés soufrés organiques tels que décrits ci-dessus, plus préférentiellement choisis parmi les polysulfures, les mercaptans, les sulfoxydes, et les mélanges de ces composés, et plus préférentiellement encore parmi les polysulfures.

Dans ce mode de réalisation, le ou les composés soufrés organiques représentent avantageusement de 10 à 40% en poids, de préférence de 15 à 25% en poids, par rapport au poids total de la phase organique.

L'émulsion

L'émulsion mise en oeuvre dans l'étape (i) du procédé selon l'invention peut être une émulsion directe (c'est-à-dire de type huile-dans eau, la phase organique étant dispersée dans la phase aqueuse) ou une émulsion indirecte (c'est-à-dire de type eau-dans huile, la phase aqueuse étant dispersée dans la phase organique).

De préférence, c'est une émulsion directe, c'est-à-dire que la phase organique est dispersée dans la phase aqueuse.

Selon un mode de réalisation préféré, l'émulsion comprend en outre un ou plusieurs tensioactif(s).

Le ou les tensioactifs peuvent être avantageusement choisis parmi les tensioactifs anioniques, les tensioactifs non-ioniques, les tensioactifs amphotères, et leurs mélanges, de préférence parmi les tensioactifs non-ioniques.

A titre d'exemples de tensioactifs non-ioniques appropriés, on peut citer:

- les alkyl($C_8$-$C_{24}$)phénols oxyalkylénés ;
- les alcools en $C_8$ à $C_{40}$, saturés ou non, linéaires ou ramifiés, oxyalkylénés ou glycérolés, et comportant une ou deux chaînes grasses;
- les esters d'acides en $C_8$ à $C_{30}$, saturés ou non, linéaires ou ramifiés, et de polyols ou de polyéthylèneglycols ;
- les esters d'acides en $C_8$ à $C_{30}$, saturés ou non, linéaires ou ramifiés, et de sorbitol de préférence oxyéthylénés ;
- les esters d'acides gras et de saccharose,
- les alkyl($C_8$-$C_{30}$)(poly)glucosides et les alcényl($C_8$-$C_{30}$)(poly)glucosides, éventuellement oxyalkylénés (0 à 10 motifs oxyalkylène) et comprenant de 1 à 15 motifs glucose ; les esters d'alkyl ($C_8$-$C_{30}$)(poly)glucosides,
- les huiles végétales oxyéthylénées, saturées ou non ;
- les condensats d'oxyde d'éthylène et/ou d'oxyde de propylène ;
- et leurs mélanges.

Les motifs oxyalkylénés sont plus particulièrement des motifs oxyéthylénés, oxypropylénés, ou leur combinaison, de préférence oxyéthylénés.

Le nombre de moles d'oxyde d'éthylène et/ou de propylène va de préférence de 1 à 250, plus particulièrement de 2 à 100 ; mieux de 2 à 50 ; le nombre de moles de glycérol va notamment de 1 à 50, mieux de 1 à 10.

Le ou les tensioactifs non-ioniques sont plus préférentiellement choisis parmi les alcools en $C_8$ à $C_{24}$ oxyéthylénés comprenant de 1 à 40 moles d'oxyde d'éthylène, de préférence de 2 à 20 moles d'oxyde d'éthylène.

Le ou les tensioactifs sont de préférence présents en une teneur totale allant de 0,1 à 5% en poids, mieux de 0,2 à 2,5% en poids, et mieux encore de 0,5 à 1,5% en poids, par rapport au poids total de l'émulsion.

L'étape (i)

L'étape (i) consiste à mettre en contact les particules de catalyseur avec l'émulsion décrite ci-avant.

De préférence, le volume d'émulsion employée à cette étape est supérieur ou égal à au moins 80% du volume poreux total du catalyseur. Plus préférentiellement, le volume d'émulsion employée est compris dans la gamme allant de 100 à 140% du volume poreux total du catalyseur, et mieux encore de 100 à 120% du volume poreux total du catalyseur.

De manière connue en soi, le volume poreux d'un catalyseur est déterminé par adsorption d'azote. Le volume poreux mesuré par adsorption d'azote a été déterminé par le modèle Barrett-Joyner-Halenda (BJH). L'isotherme d'adsorption - désorption d'azote selon le modèle BJH est décrit dans la publication "The Journal of American Society",73, 373, (1951) de E.P.Barrett, L.G.Joyner et P.P.Halenda.

D'une manière générale, l'étape (i) est réalisée par imprégnation du catalyseur au moyen de l'émulsion, de telle sorte que l'émulsion pénètre dans la porosité du catalyseur. A cet effet, on peut employer tout moyen connu permettant de faire pénétrer un liquide dans des particules poreuses.

L'on peut par exemple procéder par trempage et brassage du catalyseur dans l'émulsion.

De préférence, cette étape est réalisée en agitant les particules de catalyseur, et en pulvérisant l'émulsion sur celles-ci.

Cette étape peut être effectuée de manière continue ou discontinue, de préférence de manière continue.

Dans le cadre d'un procédé en mode continu, l'étape (i) peut être par exemple effectuée de l'une des manières suivantes :

- par pulvérisation de l'émulsion sur le catalyseur dans une enceinte de mélange disposée en amont de l'unité de sulfuration ;
- par pulvérisation de l'émulsion sur le catalyseur dans le système d'alimentation de l'unité de sulfuration, par exemple pendant que le catalyseur passe dans un chargeur vibrant ou dans une vis hélicoïdale, avec la double action de mélanger l'émulsions avec le catalyseur et d'alimenter la ou les unités de sulfuration.

L'étape (i) peut avoir une durée variable, allant généralement de quelques minutes à quelques heures. De préférence, cette mise en contact dure environ 1 heure.

Elle peut être réalisée à une pression allant de la pression atmosphérique à 5 bars, de préférence à pression atmosphérique, et à une température préférentielle allant de la température ambiante à 100°C.

Selon un mode de réalisation préféré, l'étape (i) est réalisée à une température allant de 25°C à 100°C, de préférence de 40 à 90°C et mieux encore de 50 à 80°C.

L'étape (ii) de sulfuration

Le procédé selon l'invention comprend également au moins une étape (ii), au cours de laquelle le catalyseur issu de l'étape (i) - donc sur lequel est déposée l'émulsion - est mis en contact avec un mélange gazeux soufré qui contient de l'hydrogène et un composé sulfuré.

Avantageusement, le composé sulfuré est du sulfure d'hydrogène ($H_2S$), ou un composé soufré susceptible de libérer du sulfure d'hydrogène par hydrogénolyse dans les conditions opératoires de cette étape. De tels composés soufrés peuvent être choisis par exemple parmi le soufre élémentaire, le $CS_2$, les composés organiques soufrés tels que les mercaptans, les sulfures, les disulfures, les polysulfures, les thiols, les thiophènes, les sulfoxydes.

De préférence, le composé sulfuré est du sulfure d'hydrogène.

L'on peut procéder, par exemple, de la manière décrite dans la demande de brevet EP 1 634 939.

Ainsi, selon un mode préféré de réalisation de l'étape (ii), le catalyseur est mis en contact avec un mélange gazeux soufré contenant de l'hydrogène et du sulfure d'hydrogène.

Le sulfure d'hydrogène représente avantageusement de 5 à 70 % en volume du mélange sulfure d'hydrogène + hydrogène, de préférence de 10 à 60 % en volume.

Le mélange gazeux soufré peut, en plus de l'hydrogène et du composé sulfuré, comprendre également un ou plusieurs autres gaz, tels que notamment des gaz inertes de dilution, par exemple de l'azote. De tels gaz additionnels peuvent par exemple représenter de 5 à 80 % en volume dudit mélange gazeux.

L'étape (ii) est avantageusement effectuée à une température allant de 150 à 500°C, de préférence de 200 à 350°C.

De préférence, la température varie au cours de la durée de l'étape (ii). Ainsi, l'on peut procéder en au moins deux étapes, une première étape de montée progressive en température, suivie d'une deuxième étape de palier à une température comprise dans la gamme allant de 200 à 350°C.

L'étape (ii) est de préférence effectuée en mode continu, dans une unité de sulfuration contenant un ou plusieurs réacteurs au sein duquel les particules de catalyseur circulent au contact du mélange gazeux soufré.

L'étape (ii) peut être effectuée en lit fixe ou en lit mobile, par exemple en lit fluidisé ou bouillonnant, ou dans un four rotatif. Dans le cas d'un lit mobile, le mélange gazeux soufré peut circuler à co-courant ou à contre-courant du lit de catalyseur, de préférence à contre-courant.

La quantité de soufre incorporé dans le catalyseur lors de cette étape dépend de la quantité de métaux actifs présents à la surface de ce dernier. De préférence, la quantité de soufre incorporé représente de 50 à 200%, de préférence 80 à 120%, de manière plus préférée de 90 à 110% de la quantité stoechiométrique de soufre nécessaire pour que les métaux actifs se trouvent intégralement sous forme de sulfures métalliques.

Par exemple, dans le cas d'un catalyseur dont les métaux actifs sont le cobalt et le molybdène, les formes sulfures correspondant à une stoechiométrie de 100% peuvent être assimilées à respectivement CoS et $MoS_2$.

Le procédé

Dans le procédé selon la présente invention, l'étape (ii) est effectuée après l'étape (i). Elle peut être effectuée directement après l'étape (i), ou en être séparée par une ou plusieurs étape(s) intermédiaire(s).

Ainsi, le procédé selon l'invention peut également comprendre, entre les étapes (i) et (ii), une étape de séchage du catalyseur, qui peut être effectuée à une température allant de 80°C à 350°C, de préférence de 100°C à 200°C, à l'air libre ou en présence d'un flux gazeux d'air, de gaz inerte tel que l'azote, ou de tout autre gaz approprié.

Selon un mode de réalisation préféré, le procédé ne comprend pas d'étape intermédiaire, notamment pas d'étape de séchage. En d'autres termes, l'étape (i) est directement suivie de l'étape (ii) et le catalyseur sur lequel est déposé l'émulsion est directement sulfuré.

Le procédé de sulfuration selon l'invention peut également comprendre en outre une ou plusieurs étapes additionnelles, qui peuvent être effectuées avant et/ou après lesdites étapes (i) et (ii) décrites ci-avant.

Ainsi, l'étape (ii) peut être avantageusement suivie d'une étape de refroidissement, au cours de laquelle le catalyseur est ramené à température ambiante, ou à une température proche de la température ambiante. Ce refroidissement, généralement effectué progressivement, peut être réalisé en présence du mélange gazeux soufré, ou de tout autre gaz approprié, par exemple de l'hydrogène, un gaz inerte tel que l'azote, de l'oxygène, ou un mélange de tels gaz, ou de différents mélanges gazeux employés successivement.

Ainsi, l'on peut procéder à une première phase de refroidissement du catalyseur en mélange gazeux soufré, suivie d'une deuxième phase de refroidissement sous gaz inerte, par exemple de l'azote.

Selon un mode de réalisation préféré de l'invention, le procédé comprend en outre, après l'étape (ii), une étape de passivation du catalyseur, qui est de préférence une passivation oxydante.

Cette passivation oxydante consiste à mettre en contact le catalyseur avec de l'oxygène ou un mélange gazeux contenant de l'oxygène. On emploie de préférence un mélange gazeux contenant moins de 30% d'oxygène. Ce mélange gazeux peut notamment être de l'air. Le contact du catalyseur avec le gaz contenant de l'oxygène peut se faire en plusieurs temps, avec augmentation progressive de la teneur en oxygène au cours du temps.

L'étape de passivation est de préférence effectuée à une température inférieure ou égale à 150°C, pour une durée généralement inférieure à 24 heures. Elle peut notamment être effectuée simultanément à l'étape de refroidissement du catalyseur effectuée à l'issue l'étape (ii).

Dans le cas d'un procédé de sulfuration effectué ex situ, la passivation présente notamment l'avantage de diminuer la tendance pyrophorique des phases sulfures présentes à la surface du catalyseur, et donc de permettre un transfert ou un stockage aisé de celui-ci, par exemple dans des fûts métalliques ou autres types de containers.

Le procédé selon la présente invention peut être réalisé in situ, c'est-à-dire directement au sein de l'unité dans laquelle le catalyseur est employé.

Selon un mode de réalisation préféré, il est réalisé ex situ, c'est-à-dire après déchargement du catalyseur hors de l'unité.

Les catalyseurs d'hydrotraitement

Le procédé selon la présente invention permet de sulfurer tout catalyseur destiné au traitement d'hydrocarbures, dans les domaines du raffinage et de la pétrochimie.

Ces catalyseurs se présentent sous forme de particules solides poreuses, qui comprennent au moins un métal actif tel que notamment un métal hydrogénant, déposé sur un support à base d'un ou plusieurs oxydes minéraux réfractaires.

Par métal hydrogénant, on désigne un métal des groupes VIII et VIB de la classification périodique des éléments.

De préférence, les catalyseurs traités au moyen du procédé selon l'invention sont des catalyseurs contenant au moins un métal du groupe VIII de la classification périodique des éléments, tel que par exemple le cobalt, le nickel, le fer, associé à au moins un métal du groupe VIB tel que par exemple le molybdène, le tungstène, le chrome. La teneur en métal ou métaux du groupe VIII est généralement comprise entre 0,1 et 10% en poids par rapport au poids total du catalyseur, et la teneur en métal ou métaux du groupe VIB est généralement comprise entre 1 et 20% en poids par rapport au poids total du catalyseur.

Le ou les métaux hydrogénant est (sont) déposé(s) sur un support à base d'un ou plusieurs oxydes minéraux réfractaires tels que notamment les alumines, les silices, les silice-alumines, les zéolithes, les zircones, les oxydes de titane et de bore, et les mélanges de tels oxydes.

Le procédé selon l'invention convient tout particulièrement à la sulfuration de catalyseurs d'hydrotraitement comprenant des métaux actifs déposés sur un support non zéolithique choisi parmi les alumines, les silices, les silice-alumines. Plus préférentiellement, ledit support non-zéolithique contient au moins 30% en poids d'alumine, et de préférence au moins 50% en poids.

Le procédé selon l'invention est particulièrement approprié à la sulfuration de catalyseurs contenant les associations métalliques CoMo, NiMo, NiW, NiCoMo, déposées sur des supports à base d'alumine.

Les catalyseurs traités au moyen du procédé selon l'invention peuvent, outre le ou les métaux hydrogénant, contenir tous ingrédients additionnels appropriés. Ils peuvent ainsi contenir par exemple, et de manière non limitative, un ou plusieurs composés halogénés, borés, phosphorés, un ou plusieurs éléments choisis parmi ceux des groupes IIIB, IVB, VB de la classification périodique des éléments.

Le procédé selon la présente invention convient tout particulièrement à la sulfuration de catalyseurs ne contenant aucun additif organique. Ainsi, il convient tout particulièrement à la sulfuration de catalyseurs pour lesquels la différence entre la perte au feu à 500°C et la perte au feu à 150°C est inférieure ou égale à 2% en poids, par rapport au poids du catalyseur initial.

De manière bien connue de l'homme du métier, l'expression « perte au feu » (ou LOI, de l'anglais « loss on ignition ») désigne la perte de masse résultant de l'échauffement d'un matériau, du fait du départ des matières volatiles.

Un catalyseur contenant des matières organiques telles qu'un additif organique présente une perte au feu significative à 500°C, résultant de la décomposition de ces matières organiques. En outre, du fait de leur grande surface spécifique et de leur caractère hygroscopique, les catalyseurs peuvent absorber une quantité non négligeable d'eau provenant entre autres de l'humidité de l'air, ce qui se caractérise par une perte au feu à 150°C pouvant aller de 5 à 10% en poids. Ainsi, pour déterminer si un catalyseur contient ou non un additif organique, il convient de considérer la différence entre la perte au feu à 500°C et la perte au feu à 150°C.

Les catalyseurs de traitement d'hydrocarbures se présentent généralement sous forme de particules solides de petite taille telles que des billes, des particules plus ou moins cylindriques, des extrudés. Ils présentent une surface spécifique, mesurée par la méthode BET, généralement comprise entre 100 et 300 m$^2$/g, un volume poreux, déterminé par adsorption d'azote, allant de 0,25 à 1 ml/g, et un diamètre de pores moyen, déterminé par adsorption d'azote, allant de 7 à 20 nm.

Une fois traité au moyen du procédé selon la présente invention, le catalyseur est prêt à l'emploi, et peut être avantageusement employé directement dans le procédé de traitement d'hydrocarbures auquel il est destiné.

Il est également possible de procéder à un second traitement de sulfuration du catalyseur, effectué notamment in situ, immédiatement avant l'emploi du catalyseur. Il peut s'agir en particulier d'un traitement de sulfuration effectué en présence d'hydrogène par passage au travers du catalyseur d'une phase liquide contenant du soufre, typiquement une coupe d'hydrocarbures soufrée et/ou enrichie en hydrocarbures soufrés, telle que par exemple un distillat éventuellement additivé en diméthyldi sulfure.

Ainsi, le procédé selon l'invention peut être employé comme procédé de pré-sulfuration, afin de préconditionner le catalyseur, de diminuer l'intensité et la durée du traitement de sulfuration finale effectué in situ, donc de gagner du temps, et d'augmenter l'efficacité du procédé de traitement d'hydrocarbures.

Les catalyseurs obtenus au moyen du procédé selon l'invention peuvent être employés dans tout procédé industriel mettant en oeuvre un catalyseur soufré. Ils sont plus particulièrement destinés aux procédés de traitement des hydrocarbures tels que les coupes pétrolières, les hydrocarbures produits à partir du gaz naturel, du charbon, et les hydrocarbures oxygénés ou non d'origine végétale.

Citons, à titre d'exemples non limitatifs, les procédés d'hydrocraquage ou d'hydroconversion, de réformage, d'isomérisation d'alkylkation, d'hydrogénation, de déshydrogénation et les procédés dits d'hydrotraitement tels que les procédés d'hydrodésulfuration, d'hydrodéazotation, d'hydrodéaromatisation, d'hydrodémétallation, d'hydrodéoxygénation.

Le procédé selon la présente invention convient tout particulièrement à la sulfuration de catalyseurs destinés aux procédés d'hydrotraitement de coupes pétrolières, et en particulier au procédé d'hydrodésulfuration.

Le procédé selon l'invention convient pour la sulfuration tant de catalyseurs neufs, que de catalyseurs usés qui ont été préalablement régénérés.

Selon un mode de réalisation préféré, le catalyseur est un catalyseur d'hydrotraitement usé qui a été préalablement régénéré.

Un catalyseur usé est un catalyseur qui, à la suite de son utilisation dans un réacteur d'hydrotraitement, a été désactivé notamment du fait du dépôt à sa surface de coke, c'est-à-dire d'un mélange d'hydrocarbures lourds, de résidus de carbone, d'impuretés métalliques.

La régénération des catalyseurs usé est un procédé bien connu qui consiste à effectuer la combustion du coke, en chauffant le catalyseur à une température élevée en présence d'un gaz contenant de l'oxygène.

Le procédé de traitement d'un catalyseur usé

Ainsi, l'invention a également pour objet un procédé de traitement d'un catalyseur usé, qui comprend :

- une étape de traitement thermique du catalyseur en présence d'oxygène et à une température allant de 350°C à 550°C, puis ;
- la sulfuration du catalyseur sulfuration au moyen du procédé tel que décrit ci-avant.

L'étape de traitement thermique consiste en un chauffage du catalyseur usé à une température allant de 350°C à 550°C, en présence d'oxygène. Elle a pour but d'éliminer le coke présent à la surface du catalyseur, par combustion de celui-ci.

Le contrôle de la température au sein du catalyseur est essentiel lors de cette étape. La température doit en effet être suffisamment élevée pour permettre une combustion aussi complète que possible du coke. Cependant, elle ne doit pas dépasser 550°C, et ce même localement, car cela aurait pour effet d'endommager le catalyseur par exemple en dégradant la porosité de celui-ci.

De préférence, cette étape de traitement thermique est effectuée à une température inférieure ou égale à 530°C, et de manière préférée inférieure ou égale à 520°C.

Selon un mode de réalisation préféré, l'étape de traitement thermique est effectuée, en totalité ou en partie, à une température comprise dans la gamme allant de 450 à 550°C.

La température au sein du catalyseur peut être contrôlée, de manière connue en soi, par exemple au moyen de thermocouples disposés de manière appropriée dans la masse du catalyseur.

Cette étape est effectuée en présence d'oxygène, par exemple au moyen d'un flux de gaz contenant de l'oxygène. Ce gaz peut être constitué par exemple d'air, pur ou mélangé à de l'oxygène additionnel ou à un gaz inerte, de manière à augmenter ou diminuer la teneur de l'air en oxygène. Ce gaz peut également être constitué d'un mélange d'oxygène et de gaz inerte tel que l'azote, ou d'autres mélanges gazeux comprenant de l'oxygène.

La teneur en oxygène du gaz est de préférence contrôlée, de manière à mieux contrôler la température de combustion. Cette teneur peut être fixe, ou au contraire varier au cours du temps. Le débit de gaz est également contrôlé, de façon à contrôler la combustion.

Cette étape de traitement thermique peut comprendre plusieurs phases, effectuées à des températures différentes et/ou en présence de quantités variables d'oxygène.

La durée totale de cette étape dépend généralement de la quantité de catalyseur à traiter, de la composition de celui-ci, de la quantité de coke présent à sa surface, et des conditions opératoires (température, teneur en oxygène). Cette durée est d'autant plus courte que la température est élevée. Elle est généralement comprise entre 0,1 et 20 heures, de préférence entre 0,2 et 10 heures.

Les exemples qui suivent sont donnés à titre purement illustratif de la présente invention.

## EXEMPLES

Les exemples ci-après ont été réalisés à partir d'un catalyseur conventionnel d'hydrotraitement usé de type NiMo sur alumine, issu d'une unité d'hydrodéoxygénation. Ce catalyseur a été régénéré par traitement thermique en présence d'un gaz oxygéné dans une unité de type roto-louvre. Ce catalyseur régénéré (dénommé catalyseur C) contient 4% en poids de NiO et 18% en poids de $MoO_3$ supportés sur de l'alumine gamma. Son volume poreux est de 0,52 ml/g.

Exemple 1 comparatif :

Un échantillon de 100g de catalyseur C a été traité de la manière suivante :

- une unique étape (ii) de mise en contact du catalyseur avec un mélange gazeux constitué d'une mélange $H_2S/H_2/N_2$ avec une pression partielle d'$H_2S$ de 0,3, une pression partielle de $H_2$ de 0,25 et une pression partielle de $N_2$ de 0,45. Cette étape a été effectuée à pression atmosphérique, dans un réacteur vertical, avec le flux de gaz descendant traversant le lit de catalyseur une vitesse volumique horaire de gaz (VVH) de 300 $h^{-1}$. La température a été augmentée de 5°C/min jusqu'à 250°C, puis un palier de 2h à cette température a été respecté.

Un échantillon de catalyseur sulfuré S1 a ainsi été obtenu.

Exemple 2 comparatif :

Un échantillon de 100g de catalyseur C a été traité de la manière suivante :

- une première étape (i) de mise en contact du catalyseur avec une solution organique constituée de 14,3g d'huile de colza (correspondant à 30% du volume poreux du catalyseur), par imprégnation du catalyseur avec la solution organique à une température de 60°C pendant une durée de 1h, puis
- une seconde étape (ii) identique à celle décrite dans l'exemple 1 ci-avant.

Un échantillon de catalyseur sulfuré S2 a ainsi été obtenu.

Exemple 3 comparatif :

Un échantillon de 100g de catalyseur C a été traité de la manière suivante :

- une première étape (i) de mise en contact du catalyseur avec 30ml d'une solution d'acide citrique dans l'eau ayant une concentration de 27% en poids d'acide (correspondant à 60% du volume poreux du catalyseur), par imprégnation du catalyseur avec cette solution à une température de 60°C pendant une durée de 1h, puis

- une seconde étape (ii) identique à celle décrite dans l'exemple 1 ci-avant.

Un échantillon de catalyseur sulfuré S3 a ainsi été obtenu.

Exemple 4 comparatif :

Un échantillon de 100g de catalyseur C a été traité de la manière suivante :

- une première étape (i) de mise en contact du catalyseur avec 30ml d'une solution d'acide citrique dans l'eau ayant une concentration de 27% en poids d'acide (correspondant à 60% du volume poreux du catalyseur), par imprégnation du catalyseur avec cette solution à une température de 60°C pendant une durée de 1h, puis
- une seconde étape (i)' de mise en contact du catalyseur avec une solution organique constituée de 14,3g d'huile de colza, 4,7g de di-tert-butyl-polysulfure et 0,19g d'un tensioactif constitué d'un triméthylnonyle éther de polyéthylèneglycol, commercialisé sous la dénomination Tergitol TMX 100X® (correspondant à 40% du volume poreux du catalyseur), par imprégnation du catalyseur avec la solution organique à une température de 60°C pendant une durée de 1h, puis
- une troisième étape (ii) identique à celle décrite dans l'exemple 1 ci-avant.

Un échantillon de catalyseur sulfuré S4 a ainsi été obtenu.

Exemple 5 selon l'invention :

Un échantillon de 100g de catalyseur C a été traité de la manière suivante :

- une première étape (i) de mise en contact du catalyseur avec une émulsion constituée de :

 une phase aqueuse constituée de 30ml d'une solution d'acide citrique dans l'eau ayant une concentration de 27% en poids d'acide (correspondant à 60% du volume poreux du catalyseur), et de une phase organique constituée de 19g d'huile de colza et 0,19g d'un tensioactif constitué d'un triméthylnonyle éther de polyéthylèneglycol, commercialisé sous la dénomination Tergitol TMX 100X® (correspondant à 40% du volume poreux du catalyseur),
 par imprégnation du catalyseur avec cette émulsion à une température de 60°C pendant une durée de 1h puis

- une seconde étape (ii) identique à celle décrite dans l'exemple 1 ci-avant.

Un échantillon de catalyseur sulfuré S5 a ainsi été obtenu.

Exemple 6 selon l'invention :

Un échantillon de 100g de catalyseur C a été traité de la manière suivante :

- une première étape (i) de mise en contact du catalyseur avec une émulsion constituée de :

 une phase aqueuse constituée de 30ml d'une solution d'acide citrique dans l'eau ayant une concentration de 27% en poids d'acide (correspondant à 60% du volume poreux du catalyseur), et de une phase organique constituée de 14,3g d'huile de colza, 4,7g de di-tert-butyl-polysulfure et 0,19g d'un tensioactif constitué d'un triméthylnonyle éther de polyéthylèneglycol, commercialisé sous la dénomination Tergitol TMX 100X® (correspondant à 40% du volume poreux du catalyseur),
 par imprégnation du catalyseur avec cette émulsion à une température de 60°C pendant une durée de 1h puis

- une seconde étape (ii) identique à celle décrite dans l'exemple 1 ci-avant.

Un échantillon de catalyseur sulfuré S6 a ainsi été obtenu.

Exemple 7 selon l'invention :

Un échantillon de 100g de catalyseur C a été traité de la manière suivante :

- une première étape (i) de mise en contact du catalyseur avec une émulsion constituée de :

    une phase aqueuse constituée de 30ml d'une solution d'acide maléïque dans l'eau ayant une concentration de 44% en poids d'acide (correspondant à 60% du volume poreux du catalyseur), et de une phase organique constituée de 14,3g d'huile de colza, 4,7g de di-tert-butyl-polysulfure et 0,19g d'un tensioactif constitué d'un triméthylnonyle éther de polyéthylèneglycol, commercialisé sous la dénomination Tergitol TMX 100X® (correspondant à 40% du volume poreux du catalyseur),
    par imprégnation du catalyseur avec cette émulsion à une température de 60°C pendant une durée de 1h puis

- une seconde étape (ii) identique à celle décrite dans l'exemple 1 ci-avant.

Un échantillon de catalyseur sulfuré S7 a ainsi été obtenu.

Exemple 8 selon l'invention :

Un échantillon de 100g de catalyseur C a été traité de la manière suivante :

- une première étape (i) de mise en contact du catalyseur avec une émulsion constituée de :

    une phase aqueuse constituée de 30ml d'une solution d'acide citrique dans l'eau ayant une concentration de 27% en poids d'acide (correspondant à 60% du volume poreux du catalyseur), et de une phase organique constituée de 14,6g d'huile de colza, 4,7g de di-tert-butyl-polysulfure (correspondant à 40% du volume poreux du catalyseur),
    par imprégnation rapide (mise en contact pendant une durée inférieure à 5 minutes) du catalyseur avec cette émulsion à une température de 60°C puis

- une seconde étape (ii) identique à celle décrite dans l'exemple 1 ci-avant.

Un échantillon de catalyseur sulfuré S8 a ainsi été obtenu.

Exemple 9 selon l'invention :

Un échantillon de 100g de catalyseur C a été traité de la manière suivante :

- une première étape (i) de mise en contact du catalyseur avec une émulsion constituée de :

    une phase aqueuse constituée de 30ml d'une solution d'acide phosphorique dans l'eau ayant une concentration de 15% en poids d'acide (correspondant à 60% du volume poreux du catalyseur), et de une phase organique constituée de 14,3g d'huile de colza, 4,7g de di-tert-butyl-polysulfure et 0,19g d'un tensioactif constitué d'un triméthylnonyle éther de polyéthylèneglycol, commercialisé sous la dénomination Tergitol TMX 100X® (correspondant à 40% du volume poreux du catalyseur),
    par imprégnation du catalyseur avec cette émulsion à une température de 60°C pendant une durée de 1h puis

- une seconde étape (ii) identique à celle décrite dans l'exemple 1 ci-avant.

Un échantillon de catalyseur sulfuré S9 a ainsi été obtenu.

Exemple 10 : Evaluation des performances des catalyseurs sulfurées S1 à S9

Pour chacun des catalyseurs décrits S1 à S9, les propriétés suivantes ont été évaluées :

- Détermination du taux de sulfuration du catalyseur :

La teneur en soufre a été mesurée au moyen d'un analyseur élémentaire organique, qui permet de déterminer les teneurs en C,H,N,O,S. Le taux de sulfuration (ST1) est défini comme étant le rapport entre la teneur en soufre du catalyseur mesurée, exprimée sur base sèche après correction de la perte au feu à 500°C (quantité de composés volatiles tels que l'eau, évaporés à 500°C), et la teneur en soufre théorique (ST0) du catalyseur, correspondant aux métaux sulfurés en quantité stoechiométrique c'est-à-dire sous forme de sulfures $MoS_2$ et NiS.

Le taux de sulfuration est défini par la formule suivante :

$$ST1\,(\%) = 100 * \left[ S / \left( 1 - \frac{LOI}{100} \right) \right] / ST0$$

- Détermination de l'attrition du catalyseur :

Ce paramètre a été déterminé sur des échantillons de 50 g de catalyseur, selon le principe exposé dans la norme ASTM D-4058, et qui consiste à placer un échantillon de catalyseur dans un tambour cylindrique muni sur sa génératrice d'un releveur (plaque de tôle soudée sur la paroi interne du tambour), puis après fermeture du tambour à l'aide d'un couvercle, à mettre l'ensemble en rotation pendant une durée de 30 minutes, puis à mesurer la perte en poids subie par l'échantillon de catalyseur, par tamisage sur un tamis n°20 (0.85 mm) afin d'éliminer les fines produites. Le pourcentage en poids de fines produites est ensuite calculé.

Ce test permet de simuler des chutes successives des particules de catalyseur, qui génèrent de la casse et des fines.

- Détermination de l'activité en hydrodésulfuration (HDS):

Le test est effectué dans une unité pilote, par hydrodésulfuration d'une charge constituée un gazole issu de la distillation directe de pétrole brut, dit "straight run", ayant une teneur en soufre de 1,514% en poids. Les conditions opératoires étaient les suivantes : pression de 5 MPa (50 bars), rapport $H_2$/charge de 300, vitesse volumique horaire de gaz VVH = 1,5h$^{-1}$, température de 360°C.

La teneur en soufre de la charge a été mesurée en sortie d'unité au moyen d'un analyseur par fluorescence UV.

Les constantes apparentes de la réaction de désulfuration ont été calculées selon la formule E1 ci-après :

$$K_v = \left( \frac{1}{\alpha - 1} \right) \left( \frac{1}{S^{\alpha-1}} - \frac{1}{S_0^{\alpha-1}} \right) * VVH \qquad (E1)$$

avec

$K_v$ = constante apparente de réaction
$\alpha$ = ordre de la réaction (considéré égal à 1,2)
S = teneur en soufre des effluents
$S_0$ = teneur en soufre de la charge
VVH = vitesse volumique horaire de la charge liquide.

Les performances de chaque échantillon ont été évaluées par rapport à celle d'un catalyseur de référence. Pour cela, l'activité relative volumique (notée RVA pour "Relative Volume Activity") a été calculée selon la formule E2 suivante :

$$RVA = \frac{Kv(\text{échantillon})}{Kv(\text{référence})} \times 100 \qquad (E2)$$

Comme référence, a été attribuée la valeur $K_v$ de 100 au catalyseur neuf correspondant, activé in situ (dans l'unité) au moyen d'un mélange de gazole et de diméthyldisulfure.

- Détermination de l'activité en hydrodéoxygénation (HDO) :

Le test est effectué dans une unité pilote, par hydrodéoxygénation d'une charge constituée d'huile de colza. Les conditions opératoires étaient les suivantes : pression de 2 MPa (20 bars), rapport $H_2$/charge de 1600, vitesse volumique horaire de gaz VVH = 0,5h$^{-1}$, température de 295°C. La teneur en oxygène de la charge a été mesurée en entrée et en sortie d'unité.

Les constantes apparentes de la réaction de déoxygénation ont été calculées selon la formule E1' ci-après :

$$K_v = \left(\frac{1}{\alpha - 1}\right)\left(\frac{1}{O^{\alpha - 1}} - \frac{1}{O_0^{\alpha - 1}}\right) * VVH \qquad (E1')$$

avec

$K_v$ = constante apparente de réaction
$\alpha$ = ordre de la réaction (considéré égal à 1,4)
$O$ = teneur en oxygène des effluents
$O_0$ = teneur en oxygène de la charge
VVH = vitesse volumique horaire de la charge liquide.

Les performances de chaque échantillon ont été évaluées par rapport à celle d'un catalyseur de référence. Pour cela, l'activité relative volumique (notée RVA pour "Relative Volume Activity") a été calculée selon la formule E2' suivante :

$$RVA = \frac{Kv(\acute{e}chantillon)}{Kv(r\acute{e}f\acute{e}rence)} \times 100 \qquad (E2')$$

Comme référence, a été attribuée la valeur $K_v$ de 100 au catalyseur neuf correspondant, activé in situ (dans l'unité) au moyen d'un mélange d'huile végétale hydrotraitée et de diméthyldisulfure.

Les résultats obtenus sont détaillés dans le tableau 1 ci-dessous.

Tableau 1

| Catalyseur | Sulfuration ST1 (taux en %) | Attrition (%) | Activité HDS (%) | Activité HDO (%) |
|---|---|---|---|---|
| S1 | 95 | 0,5 | 92 | 93 |
| S2 | 92 | 0,3 | 98 | 99 |
| S3 | 99 | 3,5 | 96 | 102 |
| S4 | 98 | 4,0 | 103 | 110 |
| S5 | 100 | 0,3 | 110 | 116 |
| S6 | 100 | 0,3 | 117 | 126 |
| S7 | 100 | 0,5 | 115 | 123 |
| S8 | 100 | 1,1 | 108 | 112 |
| S9 | 100 | 0,2 | 107 | 110 |

Ces résultats montrent que les échantillons de catalyseurs S5, S6, S7, S8 et S9 sulfurés conformément au procédé selon l'invention présentent des propriétés supérieures aux échantillons S1, S2, S3 et S4 sulfurés au moyen des procédés non conformes à l'invention.

Ces résultats montrent que le procédé selon l'invention confère au catalyseur des propriétés supérieures en termes de taux de sulfuration, de réduction de l'attrition et d'activité dans différentes réactions d'hydrotraitement.

**Revendications**

1. Procédé de sulfuration d'un catalyseur de traitement d'hydrocarbures, comprenant :

(i) au moins une étape de mise en contact du catalyseur avec une émulsion comprenant :

(ia) une phase aqueuse comprenant au moins un acide; et
(ib) une phase organique ; puis

(ii) au moins une étape de mise en contact du catalyseur avec un mélange gazeux soufré contenant de l'hydrogène et un composé sulfuré.

2. Procédé selon la revendication précédente, **caractérisé en ce que** ladite phase aqueuse (ia) comprend un ou plusieurs acides, sous forme d'acides libres ou sous forme salifiée, choisis parmi les acides minéraux et les acides organiques, de préférence parmi les acides organiques carboxyliques, et plus préférentiellement parmi les acides monocarboxyliques, les acides dicarboxyliques, les acides tricarboxyliques, les acides aminopolycarboxyliques et leurs mélanges.

3. Procédé selon la revendication précédente, **caractérisé en ce que** le ou les acides carboxyliques sont choisis parmi l'acide maléique, l'acide glycolique, l'acide thioglycolique, l'acide citrique, et leurs mélanges, et plus préférentiellement la phase aqueuse contient de l'acide citrique.

4. Procédé selon l'une quelconque des revendications précédentes, **caractérisé en ce que** le ou les acides représentent de 3 à 30% en poids, de préférence de 5 à 20% en poids, par rapport au poids total de l'émulsion, cette teneur étant exprimée sur la base de la forme acide libre.

5. Procédé selon l'une quelconque des revendications précédentes, **caractérisé en ce que** la phase aqueuse (ia) représente de 40 à 70% en volume, par rapport au volume total de l'émulsion, de préférence de 50 à 60% en volume.

6. Procédé selon l'une quelconque des revendications précédentes, **caractérisé en ce que** la phase organique (ib) comprend une ou plusieurs huiles, de préférence choisies parmi les composés et mélanges de composés comprenant au moins une chaîne ayant au moins 8 atomes de carbone, plus préférentiellement choisies parmi les huiles végétales, les huiles animales, les huiles minérales, les huiles synthétiques et leurs mélanges.

7. Procédé selon la revendication précédente, **caractérisé en ce que** la phase organique (ib) comprend une ou plusieurs huiles minérales, de préférence choisies parmi les fractions de carburants et/ou de combustibles telles que les fractions d'essence, de carburéacteur, de naphtas, de gazoles, de fiouls ; les fractions d'huile lubrifiante ; les fractions de solvants.

8. Procédé selon l'une des revendications 6 et 7, **caractérisé en ce que** la phase organique (ib) comprend une ou plusieurs huiles végétales, de préférence choisies parmi l'huile de ricin, l'huile de tournesol, l'huile d'arachide, l'huile de soja, l'huile de colza, l'huile de coprah, l'huile de maïs, l'huile de palme, l'huile de lin et l'huile de carthame.

9. Procédé selon l'une quelconque des revendications précédentes, **caractérisé en ce que** la phase organique (ib) comprend également un ou plusieurs composés soufrés, de préférence choisis parmi les composés soufrés organiques et plus préférentiellement parmi les polysulfures, les mercaptans, les sulfoxydes, et les mélanges de ces composés, et plus préférentiellement parmi :

- les polysulfures choisis parmi les composés de formule $R-S_n-R'$, dans laquelle :

n est un nombre entier compris dans la gamme allant de 3 à 20, de préférence de 3 à 8 et plus particulièrement de 3 à 7, et
R et R' identiques ou différents représentent des radicaux organiques contenant de 1 à 150 atomes de carbone, de préférence de 10 à 60 atomes de carbone et plus particulièrement de 15 à 30 atomes de carbone, R' pouvant également représenter l'hydrogène ; ces radicaux pouvant être saturés ou insaturés, linéaires ou ramifiés, ou cycliques, et pouvant être choisis dans le groupe constitué par les radicaux alkyles, les radicaux alcényles, les radicaux aryles, les radicaux alkylaryles et les radicaux arylalkyles, ces radicaux pouvant comporter au moins un hétéroatome ;

- les mercaptans choisis parmi les composés de formule R-SH, dans laquelle R représente un radical organique contenant de 1 à 150 atomes de carbone, de préférence 10 à 60 atomes de carbone et plus particulièrement de 8 à 30 atomes de carbone ; ce radical pouvant être saturé ou insaturé, linéaire ou ramifié, ou cyclique, et pouvant être choisi dans le groupe constitué par les radicaux alkyles, les radicaux alcényles, les radicaux aryles, les radicaux alkylaryles et les radicaux arylalkyles, ces radicaux pouvant comporter au moins un hétéroatome ;
- les sulfoxydes choisis parmi les composés de formule R-SO-R', dans laquelle R et R', identiques ou différents, représentent des radicaux organiques contenant de 1 à 150 atomes de carbone, de préférence de 10 à 60 atomes de carbone et plus particulièrement de 15 à 30 atomes de carbone, R' pouvant également représenter l'hydrogène ; ces radicaux pouvant être saturés ou insaturés, linéaires ou ramifiés, ou cycliques, et pouvant être choisis dans le groupe constitué par les radicaux alkyles, les radicaux alcényles, les radicaux aryles, les radicaux alkylaryles et les radicaux arylalkyles, ces radicaux pouvant comporter au moins un hétéroatome ;
- et les mélanges de ces composés.

**10.** Procédé selon l'une quelconque des revendications précédentes, **caractérisé en ce que** la phase aqueuse (ia) comprend également un ou plusieurs composés soufrés, de préférence choisis parmi les composés soufrés minéraux et plus préférentiellement parmi les thiosulfates tels que le thiosulfate de sodium, le thiosulfate de potassium, le thiosulfate d'ammonium ; les métabisulfites tels que le métabisulfite de sodium, le métabisulfite de potassium, le métabisulfite d'ammonium ; et le soufre élémentaire.

**11.** Procédé selon l'une quelconque des revendications précédentes, **caractérisé en ce que** l'émulsion comprend en outre un ou plusieurs tensioactif(s), de préférence choisis parmi les tensioactifs anioniques, les tensioactifs non-ioniques, les tensioactifs amphotères, et leurs mélanges, plus préférentiellement parmi les tensioactifs non-ioniques.

**12.** Procédé selon la revendication précédente, **caractérisé en ce que** l'émulsion comprend un ou plusieurs tensioactifs non-ioniques choisis parmi :

- les alkyl($C_8$-$C_{24}$)phénols oxyalkylénés ;
- les alcools en $C_8$ à $C_{40}$, saturés ou non, linéaires ou ramifiés, oxyalkylénés ou glycérolés, et comportant une ou deux chaînes grasses
- les esters d'acides en $C_8$ à $C_{30}$, saturés ou non, linéaires ou ramifiés, et de polyols ou de polyéthylèneglycols ;
- les esters d'acides en $C_8$ à $C_{30}$, saturés ou non, linéaires ou ramifiés, et de sorbitol de préférence oxyéthylénés ;
- les esters d'acides gras et de saccharose,
- les alkyl($C_8$-$C_{30}$)(poly)glucosides et les alcényl($C_8$-$C_{30}$)(poly)glucosides, éventuellement oxyalkylénés (0 à 10 motifs oxyalkylène) et comprenant de 1 à 15 motifs glucose ; les esters d'alkyl ($C_8$-$C_{30}$)(poly)glucosides,
- les huiles végétales oxyéthylénées, saturées ou non ;
- les condensats d'oxyde d'éthylène et/ou d'oxyde de propylène ;
- et leurs mélanges ;

et de préférence parmi les alcools en $C_8$ à $C_{24}$ oxyéthylénés comprenant de 1 à 40 moles d'oxyde d'éthylène, de préférence de 2 à 20 moles d'oxyde d'éthylène.

**13.** Procédé selon l'une des revendications 11 et 12, **caractérisé en ce que** le ou les tensioactifs sont présents en une teneur totale allant de 0,1 à 5% en poids, mieux de 0,2 à 2,5% en poids, et mieux encore de 0,5 à 1,5% en poids, par rapport au poids total de l'émulsion.

**14.** Procédé selon l'une quelconque des revendications précédentes, **caractérisé en ce que** le volume d'émulsion employée à l'étape (i) est supérieur ou égal à au moins 80% du volume poreux total du catalyseur, de préférence compris dans la gamme allant de 100 à 140% du volume poreux total du catalyseur, et mieux encore de 100 à 120% du volume poreux total du catalyseur.

**15.** Procédé selon l'une quelconque des revendications précédentes, **caractérisé en ce que** l'étape (i) est réalisée à une température allant de 25°C à 100°C, de préférence de 40 à 90°C et mieux encore de 50 à 80°C.

**16.** Procédé selon l'une quelconque des revendications précédentes, **caractérisé en ce que** l'étape (ii) est effectuée par mise en contact du catalyseur avec un mélange gazeux soufré contenant de l'hydrogène et du sulfure d'hydrogène.

**17.** Procédé de traitement d'un catalyseur usé, **caractérisé en ce qu'**il comprend :

- une étape de traitement thermique du catalyseur en présence d'oxygène à une température allant de 350°C à 550°C, puis ;
- la sulfuration du catalyseur au moyen du procédé tel que défini dans l'une quelconque des revendications précédentes.

Europäisches
Patentamt

European
Patent Office

Office européen
des brevets

# RAPPORT DE RECHERCHE EUROPEENNE

Numéro de la demande

EP 24 21 5401

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 2 295 521 A1 (EURECAT SA [FR]) 16 mars 2011 (2011-03-16) * revendications 1, 5 * ----- | 1-17 | INV. B01J37/16 B01J37/20 |
| A | CN 101 417 246 A (CHINA PETROCHEMICAL CORP [CN]) 29 avril 2009 (2009-04-29) * figures 1, 7, 8, 10 * ----- | 1-17 | |

| | |
|---|---|
| | DOMAINES TECHNIQUES RECHERCHES (IPC) |
| | B01J |

Le présent rapport a été établi pour toutes les revendications

| Lieu de la recherche | Date d'achèvement de la recherche | Examinateur |
|---|---|---|
| La Haye | 27 mars 2025 | Campbell, Paul |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**EP 4 566 712 A1**

## ANNEXE AU RAPPORT DE RECHERCHE EUROPEENNE
## RELATIF A LA DEMANDE DE BREVET EUROPEEN NO.

EP 24 21 5401

27-03-2025

| Document brevet cité au rapport de recherche | Date de publication | Membre(s) de la famille de brevet(s) | Date de publication |
|---|---|---|---|
| EP 2295521 A1 | 16-03-2011 | CA 2714330 A1 | 11-03-2011 |
| | | CN 102019209 A | 20-04-2011 |
| | | DK 2295521 T3 | 15-07-2019 |
| | | EP 2295521 A1 | 16-03-2011 |
| | | FR 2949981 A1 | 18-03-2011 |
| | | JP 5611750 B2 | 22-10-2014 |
| | | JP 2011056503 A | 24-03-2011 |
| | | US 2011098175 A1 | 28-04-2011 |
| CN 101417246 A | 29-04-2009 | AUCUN | |

EPO FORM P0460

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1634939 A
- EP 0993868 A
- EP 1077085 A
- EP 1272272 A
- EP 2295521 A
- EP 2295522 A

**Littérature non-brevet citée dans la description**

- **DE E.P.BARRETT** ; **L.G.JOYNER** ; **P.P.HALENDA**. *The Journal of American Society*, 1951, vol. 73, 373